# EUROPÄISCHE PATENTANMELDUNG

(11) **EP 4 134 869 A1**
(43) Veröffentlichungstag der Anmeldung: **15.02.2023**
(21) Anmeldenummer: 22200000.2
(22) Anmeldetag: 20.05.2016
(51) Int. Cl.: G06K 19/077, B65D 19/00, G01V 15/00, F42B 7/00, G06K 19/00, F42B 12/36

(54) **EINSCHUSSKÖRPER, VERBUND VON EINSCHUSSKÖRPERN UND VERFAHREN ZUM EINSCHIESSEN EINES EINSCHUSSKÖRPERS**

(30) Priorität: 25.05.2015 DE 102015006506; 25.05.2015 DE 202015003677 U; 26.10.2015 DE 102015013722; 26.10.2015 DE 202015007358 U
(62) Teilanmeldung aus: 16725480.4
(71) Anmelder: Wewewe GmbH, 73033 Göppingen (DE)
(72) Erfinder: Burgbacher, Axel C., 73033 Göppingen (DE)
(74) Vertreter: Patentanwälte Ruff, Wilhelm, Beier, Dauster & Partner mbB

(57) **Zusammenfassung**

Die Erfindung betrifft einen Verbund (6) von mehreren gleichen Einschusskörpern (1), wobei jeder Einschusskörper (1) einen RFID-Tag (2) als elektronische oder elektromechanische Sende- und/oder Empfangsvorrichtung aufweist. Die Einschusskörper (1) sind nebeneinander oder hintereinander durch ein oder mehrere Verbindungselemente (28) miteinander verbunden, wobei die Verbindungselemente (28) für ein mechanisches Abreißen (4) durch äußere Krafteinwirkung (F) auf einen einzelnen Einschusskörper (1) ausgebildet sind. So können sie zusammenhängend als eine Art Magazin (6) eine lineare Anordnung bilden für pneumatische oder elektrische Nagel- oder Bolzenschussgeräte (20) als Einschussvorrichtung, um beispielsweise in Paletten (25) zu deren Kennzeichnung eingeschossen zu werden.

## Beschreibung

Die Erfindung betrifft einen Einschusskörper zum Einschießen in eine Transportaufnahmevorrichtung, einen Verbund von mehreren gleichen Einschusskörpern, wobei jeder Einschusskörper eine elektronische oder elektromechanische Sende- und/oder Empfangsvorrichtung aufweist, sowie ein Verfahren zum Einschießen eines Einschusskörpers in einen Teil einer Transportaufnahmevorrichtung.

Die Kennzeichnung von Objekten, Bauteilen oder Gegenständen mittels Befestigung von sogenannten RFID-Tags gewinnt immer mehr an Bedeutung. Die Fähigkeit dieser Tags, eindeutige oder individualisierbare Daten drahtlos auslesen oder schreiben zu können, bietet von der Erfassung über das Nachverfolgen, das sog. Tracking, bis zum Eigentumsnachweis eine nahezu unendliche Vielfalt an Nutzungsmöglichkeiten. RFID-Tags gibt es in mannigfaltiger Ausführungen, vom entwertbaren Textiletikett über Identifikationskarten bis zu Schlüsselanhängern in der Größe eines Einkaufswagen-Chips.

Die DE 102006018461 A1 beschreibt einen zwischen zwei glasfaserverstärkten Lagen eingebetteten RFID-Chip, der flach ausgebildet ist und eine Basis- und eine Deckschicht aufweist. Dieser RFID-Chip ist für scheibenförmige Transponder geeignet, bei denen es besonders auf eine flache Bauform ankommt.

Die WO 2013087873 A1 beschreibt einen speziell für Fahrzeugreifen ausgelegten RFID-Chip, der mittels einem Sicherungsband pneumatisch fixiert wird. Die WO 2014096554 A1 zeigt die Einbettung eines RFID-Chips in ein aus Kunststoff gespritztes Gehäuse mit eingebauter Elektronik zur Schnellbefestigung an Objekten für Einbau und spätere, einfache Lösbarkeit.

Alle diese Ausbildungen lösen jedoch nicht die eigentliche Problemstellung. Die Gesamtkosten eines neuen Markierungssystems stellen trotz vieler technologischer Vorteile einen entscheidenden Faktor für die Akzeptanz dieser Technologie dar; neben den Herstellkosten des Tags muss auch die Zeit, die das Anbringen der Tags an der Ware benötigt, berücksichtigt werden. Unter gewerblichen bzw. industriellen Aspekten zählt dabei nicht nur jede Sekunde, sondern auch der Qualifikationsgrad des Mitarbeiters, der das System anbringen soll. Ist dieser hoch, liegen die Kosten naturgemäß ebenfalls höher als bei geringer qualifiziertem Personal.

### AUFGABE UND LÖSUNG

Der Erfindung liegt die Aufgabe zugrunde, einen eingangs genannten Einschusskörper, einen Verbund von mehreren Einschusskörpern sowie ein eingangs genanntes Verfahren zu schaffen, mit denen Probleme des Standes der Technik gelöst werden können und es insbesondere möglich ist, schnell und einfach eine Vielzahl von Gegenständen, vorzugsweise Transportaufnahmevorrichtungen, mit Einschusskörpern zu versehen.

Gelöst wird diese Aufgabe durch einen Einschusskörper mit den Merkmalen des Anspruchs 1, einen Verbund von mehreren Einschusskörpern mit den Merkmalen des Anspruchs 4 sowie ein Verfahren mit den Merkmalen des Anspruchs 19. Vorteilhafte sowie bevorzugte Ausgestaltungen der Erfindung sind Gegenstand der weiteren Ansprüche und werden im Folgenden näher erläutert. Manche der nachfolgenden, jedoch nicht erschöpfend aufgezählten Merkmale und Eigenschaften werden teilweise nur für den Einschusskörper oder nur für den Verbund oder nur für das Verfahren beschrieben. Sie sollen jedoch unabhängig davon sowohl für den Einschusskörper als auch für den Verbund oder für das Verfahren selbständig und unabhängig voneinander gelten können. Der Wortlaut der Ansprüche wird durch ausdrückliche Bezugnahme zum Inhalt der Beschreibung gemacht.

Ein Einschusskörper zum Einschießen in eine Transportaufnahmevorrichtung ist länglich ausgebildet und weist eine elektronische oder elektromechanische Sende- und/oder Empfangsvorrichtung auf, die als RFID- oder NFC-Tag ausgebildet ist. Der Einschusskörper ist mindestens an einer Spitze verjüngt ausgebildet. Vorteilhaft kann eine Spitze allgemein in gewisser Weise stumpf bzw. abgeflacht ausgebildet sein, vorzugsweise auf einen Durchmesser der stumpfen Vorderfläche von 3% bis 20% des Maximaldurchmessers, besonders vorzugsweise 5% bis 10%.

Ein solcher Einschusskörper kann gut auch in feste Materialien wie Holz, Pressspan oder Kunststoff sowie Verbundmaterialien aus diesen Materialien eingebracht bzw. der Einfachheit halber eingeschossen werden. Sie sind vorteilhaft Bestandteil einer Transportaufnahmevorrichtung wie einer Palette, insbesondere Euro-Palette, eines Behälters odgl.. Der RFID- oder NFC-Tag daran oder darin ermöglicht dann auf an sich aus diesem Gebiet bekannte Art und Weise die Identifizierung, insbesondere auch ein bekanntes Tracking, einer genannten Transportaufnahmevorrichtung. Dadurch lässt sich Logistik erheblich vereinfachen. Vor allem kann eine solche Identifizierung anders als Aufkleber, Farbe odgl. nicht so leicht versehentlich oder beabsichtigt entfernt werden. Wenn der Einschusskörper so weit eingebracht oder eingeschossen wird, dass er nicht mehr hervorsteht oder bis auf eine Einschussöffnung nicht sichtbar ist, dann stört er auch nicht.

In Ausgestaltung der Erfindung kann eine Spitze des Einschusskörpers mindestens zwei in Ebenen entlang der Längsmittelachse des Einschusskörpers verlaufende Längsnuten aufweisen, vorzugsweise sogar vier gleichmäßig verteilte Längsnuten. Diese Längsnuten können an einer verjüngt ausgebildeten Spitze vorgesehen sein, wobei Längsrippen dazwischen liegen können, die gleichbleibende Breite aufweisen. So kann die Spitze eine Form ähnlich einem Kreuzschlitzschraubendreher aufweisen. Dadurch kann beim Einschießen in Holz oder Pressspan ein weitgehend oder ganz zerstörungsfreies Eindringen ermöglicht werden.

In Ausgestaltung der Erfindung kann ein Einschusskörper bis auf die verjüngte Spitze weitgehend bzw. über mindestens 50% oder über mindestens 80% der Länge zylindrisch und gerade ausgebildet sein, insbesondere rundzylindrisch. So kann er leichter herstellbar sein und gut in das Material eindringen.

In weiterer Ausgestaltung der Erfindung kann an oder in dem Einschusskörper magnetisierbares bzw. ferritisches Material benachbart zu der elektronischen oder elektromechanischen Sende- und/oder Empfangsvorrichtung und/oder einer Antenne der Sende- und/oder Empfangsvorrichtung angeordnet bzw. vorgesehen sein. Dieses magnetisierbare bzw. ferritische Material schirmt die Sende- und/oder Empfangsvorrichtung und/oder deren Antenne gegen metallische Gegenstände in der Nähe ab, insbesondere wenn diese auf oder in einer Transportaufnahmevorrichtung angeordnet sind, die mit dem Einschusskörper auf erfindungsgemäße Art versehen ist. So wird die Wirksamkeit bzw. Reichweite oder Erfassbarkeit der Sende- und/oder Empfangsvorrichtung gewahrt oder zumindest vor allzu starker Einschränkung bewahrt.

Das magnetisierbare bzw. ferritische Material kann auf unterschiedliche Art an oder in dem Einschusskörper angeordnet sein. Es kann zwar außen anhaften oder angebracht sein, insbesondere unlösbar wie beispielsweise angespritzt sein. Hier besteht aber die Gefahr, dass das Material beim Einschießen beschädigt oder zumindest teilweise entfernt wird. Deswegen wird es als bevorzugt angesehen, wenn das magnetisierbare bzw. ferritische Material innerhalb des Einschusskörpers angeordnet ist, vorteilhaft eingespritzt bzw. zusammen mit dem Einschusskörper hergestellt ist. Dabei kann das magnetisierbare bzw. ferritische Material entweder als vorgefertigtes Bauteil mit in eine Spritzgussform eingebracht werden, beispielsweise schon befestigt an der Sende- und/oder Empfangsvorrichtung und/oder deren Antenne, so dass diese eine Baueinheit bilden. Alternativ kann es als magnetisierbarer bzw. ferritischer Kunststoff separat eingespritzt werden in einem Mehr-Komponenten-Spritzvorgang, wie dies auch bekannt ist. Dem Kunststoff können dabei zuvor Magnetpartikel beigemischt werden.

Das magnetisierbare bzw. ferritische Material sollte an genau definierter Stelle im Einschusskörper angeordnet sein, und zwar so, dass es die Sende- und/oder Empfangsvorrichtung und/oder deren Antenne nach oben abschirmt, wo auf einer entsprechenden Transportaufnahmevorrichtung metallische Gegenstände angeordnet sein können. Eine solche metallische Beladung, beispielsweise Getränkedosen, Maschinenteile, Bleche, etc., kann üblicherweise die Arbeitsdistanz, d.h. den Lesebereich eines RFID-Tags, auf bis zu 5% der ursprünglichen Reichweite absenken und ist somit extrem schädlich. Die partielle Abschirmung des RFID-Tags durch das magnetisierbare bzw. ferritische Material wirkt nun gegen das Unterbrechen radialer Sendestrahlung durch eine metallische Beladung darüber.

Vorteilhaft überdeckt das magnetisierbare bzw. ferritische Material als Abschirmung mindestens die Sende- und/oder Empfangsvorrichtung und/oder deren Antenne, ist also flächenmäßig so groß. Je nach Anordnung relativ zueinander ist es auch möglich, dass eine Abschirmung nur einen Ausschnitt des Raums nach oben überdeckt, beispielsweise nur einen Sektor von 45° bis 90°, insbesondere wenn die Abschirmung gebogen bzw. gewölbt verläuft. Vorzugsweise ist das magnetisierbare Material als gewölbte Fläche größer als die Sende- und/oder Empfangsvorrichtung und überragt diese in einer Richtung seitlich überall mit Überstand.

Grundsätzlich sind derartige Abschirmungen aus magnetisierbarem bzw. ferritischem Material bekannt. Besonders vorteilhaft für diesen Aspekt der Erfindung ist es, wenn dieses Material an definierter Stelle in dem Einschusskörper angeordnet ist um letztlich in definierter Stellung in der Transportaufnahmevorrichtung bzw. einem Klotz einer Palette angeordnet zu sein. Es sollte nämlich zwischen Sende- und/oder Empfangsvorrichtung und/oder deren Antenne und metallischen Gegenständen darüber angeordnet sein für maximale Wirksamkeit, in der Regel also im eingeschossenen Zustand oben liegen. Um dies sicherzustellen wird in einem weiteren Aspekt der Erfindung vorgeschlagen, das Einführen eines Einschusskörpers in eine Einschussvorrichtung nur in genau definierter Position, insbesondere bezüglich Drehung um eine Längsachse, zuzulassen. Bei Einschusskörpern, die einen gemeinsamen Verbund bilden entsprechend einem nachfolgend beschriebenen Aspekt der Erfindung, ist dies an sich schon zwingend vorgegeben. Zusätzlich und vor allem bei losen, alternativ einzeln aufmagazinierten Einschusskörpern kann vorgesehen sein, dass diese durch mindestens eine asymmetrische bzw. einseitige Vertiefung oder Einkerbung an der Außenfläche, insbesondere an einer Lateralseite, nur in genau einer einzigen Position in die Einschussvorrichtung eingebracht werden können. Diese Position sollte so sein, dass bei aufrecht bzw. standardmäßig gehaltener Einschussvorrichtung der Einschusskörper so darin liegt und eingeschossen wird in eine Transportaufnahmevorrichtung, dass das magnetisierbare bzw. ferritische Material als Abschirmung oberhalb der Sende- und/oder Empfangsvorrichtung und/oder deren Antenne liegt, diese also nach oben abschirmt. Im Prinzip sollte die Vertiefung oder Einkerbung an der Außenfläche also querab einer Verbindungsachse zwischen magnetisierbarem bzw. ferritischem Material und der Sende- und/oder Empfangsvorrichtung liegen. Die Vertiefung oder Einkerbung kann vorteilhaft in einer Richtung senkrecht zur Längsachse des Einschusskörpers verlaufen und durch einen passenden Vorsprung in der Einschussvorrichtung dafür sorgen, dass der Einschusskörper definiert eingeführt wird und letztlich definiert eingeschossen wird in eine Transportaufnahmevorrichtung. Es können zwei solche Vertiefungen oder Einkerbungen auf derselben Seite vorgesehen sein, eine vor der Sende- und/oder Empfangsvorrichtung und eine dahinter, damit sie diese nicht beeinträchtigen oder mit deren Platzbedarf kollidieren.

Bei einem Verbund von mehreren gleichen Einschusskörpern weist jeder Einschusskörper eine elektronische oder elektromechanische Sende- und/oder Empfangsvorrichtung auf, die als RFID-Tag oder NFC-Tag ausgebildet ist. Die Einschusskörper sind vorteilhaft ausgebildet wie zuvor beschrieben, müssen es jedoch nicht zwingend sein.

Erfindungsgemäß sind die Einschusskörper nebeneinander oder hintereinander durch ein oder mehrere Verbindungselemente miteinander verbunden, wobei die Verbindungselemente für ein mechanisches Abreißen durch äußere Krafteinwirkung auf einen einzelnen Einschusskörper ausgebildet sind. Sie halten die Einschusskörper also im normalen Zustand zusammen, lösen sich aber bzw. geben einen Einschusskörper frei, wenn er eingebracht oder eingeschossen oder allgemein befestigt wird. Vorteilhaft erfolgt dies automatisch.

Es ist somit ein neues Markierungssystem erfunden, das nicht nur die sekundenschnelle Markierung eines einzelnen Objekts wie beispielsweise einer Transportaufnahmevorrichtung mit einem Einschusskörper mit einem RFID-Tag oder NFC-Tag ermöglicht, sondern eine große Zahl an Objekten ebenfalls in nur wenigen Sekunden. Ein einzelnes Objekt ließe sich mit üblichen anbringbaren Tags noch in vertretbarer Zeit markieren, viele Objekt jedoch nicht.

Durch den mittels der Verbindungselemente zusammengehaltenen Verbund der vorliegenden Erfindung sind die Einschusskörper auch in größerer Menge leicht handhabbar. Die vorliegende Erfindung ermöglicht das maschinelle oder Geräte-unterstützte Anbringen von RFID-Tags vorzugsweise in nichtmetallischen Objekten mit hoher Verarbeitungsgeschwindigkeit. Das Kennzeichnen beispielsweise eines Stapels von Transportpaletten ist in kürzester Zeit möglich, Holzpaletten können bei manueller Arbeitsweise im Sekundentakt mit Tags ausgestattet werden.

Die Erfindung betrifft beispielsweise mit schlagzähem Kunststoff umhüllte, idealerweise damit umspritzte RFID-Tags, die durchaus auch aus Glaskörpern bestehen können. Sie sind untereinander mittels kleiner Verbindungselemente verbunden und können vorzugsweise aus demselben Material und im selben Spritzvorgang hergestellt werden. Damit lassen sich die Tags bzw. die Einschusskörper in üblichen sogenannten Druckluft- oder Elektronaglern verwenden, indem sie in die für üblicherweise metallische Nägel und Bolzen vorgesehene Magazine gesteckt werden können. Diese Nagelgeräte ermöglichen die sekundenschnelle Montage von RFID-Tags in Holz, Pressmaterialien, Pappe und anderen Werkstoffen, die in einem Härtebereich liegen, der ein Eindringen von Kunststoff-Bolzen ermöglicht.

Ein mit einem solchen Druckluftnagler ausgestatteter Arbeiter kann auf diese Weise realistisch 10 oder mehr Transportaufnahmevorrichtungen bzw. Euro-Paletten in 10 Sekunden mit tracking-fähigen RFID-Tags versehen. Dabei sind die Tags tief bzw. vorteilhaft vollständig in das Holz bzw. das entsprechende Material eingeschossen bzw. eingedrungen und können nur noch mit Werkzeugen wieder entfernt werden. Selbst dies ist nur unter Beschädigung der Transportaufnahmevorrichtung bzw. Palette möglich.

Mit solchen RFID-Einschusskörpern ist anschließend die schnelle und quasi simultane Erfassung von Objekten bzw. Transportaufnahmevorrichtungen möglich, hier den Paletten, was durch geeignete Software zur Überwachung von Eigentumsverhältnissen, Transportwegen, Umladungen, etc. genutzt werden kann.

In einer Ausgestaltung der Erfindung sind die Verbindungselemente für ein mechanisches Abreißen durch äußere Krafteinwirkung auf einen einzelnen Einschusskörper beim Einschießen des Einschusskörpers ausgebildet.

Vorzugsweise erfolgt das Einschießen mit einer angetriebenen Einschussvorrichtung, die insbesondere einen Pneumatik- oder Elektroantrieb aufweist, alternativ auch mit explosiven bzw. pyrotechnischen Treibladungen.

Vorteilhaft sind die Einschusskörper serienweise angeordnet und miteinander verbunden und bilden Magazine bzw. Verbünde in linearer, kreisförmiger oder spiralförmiger Anordnung für pneumatische oder elektrische Nagel- oder Bolzenschussgeräte, die als Einschussvorrichtung dienen.

Alternativ zu einem solchen festen Verbund von Einschusskörpern könnte ganz allgemein eine Einschussvorrichtung auch mit einem Magazin ähnlich einer Schusswaffe versehen werden, in das separate und vereinzelte Einschusskörper eingebracht oder eingelegt sind. Die Ähnlichkeit der Einschusskörper zu Patronen von Schusswaffen ist ja offensichtlich. Diese vorteilhaft stangenartigen Magazine könnten dann durch innenliegende Federn die einzelnen Einschusskörper in die Einschussvorrichtung, beispielsweise ein Pneumatik-Schussgerät, drücken zum einzelnen Abschießen bzw. Einschiessen. Das Laden der Magazine benötigt zwar eine gewisse Zeit wenn es manuell gemacht wird. Dafür können die Einschusskörper dann einfacher ausgebildet sein.

In einer Ausgestaltung der Erfindung sind die Einschusskörper am von einer Spitze abgewandten Ende verjüngt ausgebildet, vorzugsweise mit einer Durchmesserverjüngung um mindestens 5%, insbesondere bis 50%.

In einer Ausgestaltung der Erfindung ist eine Spitze des Einschusskörpers um bis zu 25% des maximalen Durchmessers des Einschusskörpers abgeflacht bzw. verjüngt.

Vorzugsweise kann die Spitze mehrere in Längsrichtung verlaufende Längsnuten oder Längsrippen aufweisen, beispielsweise zwei bis sechs. Dies kann eben der Verhinderung oder Verringerung des Splitterns von Holz oder Pressspan dienen.

In einer Ausgestaltung der Erfindung weisen die Einschusskörper am von der Spitze abgewandten Ende eine plastisch verformbare Fläche zur Kennzeichnung durch Prägestempel odgl. auf.

In einer Ausgestaltung der Erfindung besteht ein vorderer Bereich des Einschusskörpers aus einem härteren Material als das Material eines hinteren Teils oder des Rests des Einschusskörpers. Vorteilhaft ist dies eine Spitze, die entweder aus Metall oder einem härteren Kunststoff bestehen kann als der restliche Teil des Einschusskörpers, vorzugsweise durch Hinzufügen von Faseranteilen in der Spitze, vorzugsweise mit Faserlängen von 5 mm bis 15 mm. Besonders vorteilhaft ist der vordere Bereich form- und kraftschlüssig mit diesem hinteren Teil verbunden.

Vorzugsweise kann allgemein als Material zumindest für einen vorderen Bereich des Einschusskörpers oder alternativ für den gesamten Einschusskörper ein Polyamid verwendet werden, das langkohlenstoff- oder mindestens faserverstärkt und hitzestabilisiert sein kann, bevorzugt ein teilkristallines Polyamid mit aromatischen Anteilen. Eine Länge von Fasern, insbesondere Glas- oder Kohlenstofffasern, kann hierbei etwa 10 mm betragen entsprechend einer typischen Granulatgröße des Polyamids. So kann eine Faserstruktur zu erreicht werden, die im Vergleich zu kurzfaserverstärkten Produkten die thermomechanischen Eigenschaften des Einschusskörpers oder zumindest seines vorderen Bereichs erheblich verbessert. Beim Einsatz in vorgenannten Einschussvorrichtungen, beispielsweise Pressluftpistolen, entstehen Beschleunigungen von weit über 2000 g (2000-fache Erdbeschleunigung). Es kommt also auf die Kombination hoher Steifigkeit und aussergewöhnlicher Kerbschlagzähigkeit an. Im Industrieeinsatz kommt es weiterhin auf geringe Änderung der Eigenschaften durch Temperatur- oder Feuchte-Einfluss sowie exzellente Dauerfestigkeiten bei geringem Verzug an, um die Antenneneigenschaften des RFID- oder NFC-Tags nicht negativ zu beeinflussen. Solche Polyamide können damit Metall nahezu vollständig substituieren als Voraussetzung für adäquat maschinell einbringbare bzw. einschießbare Einschusskörper aus Kunststoff.

In einer Ausgestaltung der Erfindung weist der Einschusskörper im Querschnitt symmetrische oder asymmetrische angeordnete Längsnuten mindestens über einen Längenbereich seines maximalen Durchmessers hinausgehend auf. Dies kann einer Richtungsstabilisierung beim Einschießen und/oder einer Sicherung gegen Verdrehen und/oder einer Passung in eine gleichartige geformte Öffnung nach dem Schlüssel-Schloss-Prinzip dienen.

In einer Ausgestaltung der Erfindung bestehen die Einschusskörper bzw. eine Hülle oder Umhüllung der Einschusskörper und die Verbindungselemente aus demselben Material und sind insbesondere in einem Spritzgussverfahren im selben Vorgang gefertigt.

In einer Ausgestaltung der Erfindung weisen die Einschusskörper an dem der Spitze entgegengesetzten Ende eine Öffnung mit einer dahinter liegenden Vertiefung auf zum Einführen eines Werkzeuges, mit dem der Einschusskörper aus einem mit dem Einschusskörper bestückten Objekt wieder entfernbar ist. So kann ein Einschusskörper auch wieder entfernt werden. Vorteilhaft ist dies kein Standard-Werkzeug, sondern ein spezielles, um das unbefugte Entfernen zu verhindern.

In einer Ausgestaltung der Erfindung weist der Einschusskörper an dem der Spitze entgegengesetzten Ende eine scheibenförmige Plattform auf, die als Anschlag zur Begrenzung der Eindringtiefe in das mit dem Einschusskörper zu bestückende Objekt dient. So kann beim Einschießen in weiche Objekte bzw. weiches Material ein zu tiefes Eindringen verhindert werden.

Bei einem erfindungsgemäßen Verfahren zum Einschießen eines Einschusskörpers, insbesondere eines vorgenannten Einschusskörpers, in einen Teil eines Transportbehälters bzw. einer Transportaufnahmevorrichtung, insbesondere einer Palette, weist der Einschusskörper eine elektronische oder elektromechanische Sende- und/oder Empfangsvorrichtung auf, die als RFID-Tag oder NFC-Tag ausgebildet ist. Dabei wird der Einschusskörper mittels einer pneumatisch, explosiv bzw. pyrotechnisch oder elektrisch angetriebenen Einschussvorrichtung in den entsprechenden Abschnitt der Transportaufnahmevorrichtung eingeschossen. Derartige Einschussvorrichtungen sind bekannt, mit ihnen werden beispielsweise Nägel oder Bolzen zeitsparend und praxistauglich eingeschossen.

Vorteilhaft kann der Einschusskörper vollständig eingeschossen werden in sein Ziel, so dass er nicht mehr über eine Außenseite der Transportaufnahmevorrichtung übersteht, insbesondere nicht mehr sichtbar ist. So stört er auch nicht. Zusätzlich ist er dann auch kaum mehr entfernbar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Seitenansicht eines Einschusskörpers mit einem RFID-Tag darin,
- Fig. 2: einen erfindungsgemäßen Verbund von Einschusskörpern, der zusammengespritzt ist mit Verbindungselementen,
- Fig. 3 und 4: Abwandlungen des Einschusskörpers bzgl. äußerer Gestaltung,
- Fig. 5: eine schematische Darstellung des Verfahrens, wie ein erfindungsgemäßer Verbund von Einschusskörpern von einem Benutzer mittels einer Einschussvorrichtung in einen Stapel von Paletten eingeschossen wird,
- Fig. 6: Draufsichten auf einen einzelnen nochmals abgewandelt ausgebildeten Einschusskörper einzeln und als Verbund,
- Fig. 7: Seitenansichten der Einschusskörper der Fig. 6 und
- Fig. 8 bis 11: Abwandlungen eines Einschusskörpers in Schnittdarstellung mit ferritischem Material als Abschirmung an einem RFID-Tag samt Antenne.

### DETAILLIERTE BESCHREIBUNG DER AUSFÜHRUNGSBEISPIELE

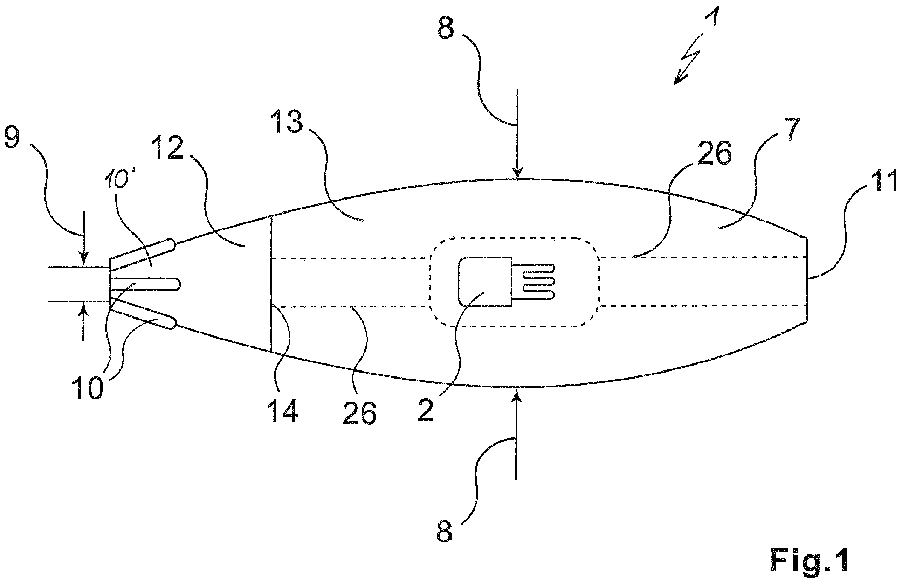

In der Fig. 1 ist ein Einschusskörper 1 mit einem umspritzten bzw. umhüllten RFID-Tag 2 dargestellt. Dieser RFID-Tag 2 kann bereits vor dem Umspritzen beispielsweise mit Kunststoff mit einer Glasummantelung oder einer Ummantelung aus stabilem Material umhüllt sein und so die Elektronik bzw. Elektromechanik gegen physikalische Außeneinflüsse wie beispielsweise Feuchtigkeit schützen. Er kann eine Antenne aufweisen, wie dies üblich und vorteilhaft ist, die hier nicht separat dargestellt ist. Ebenfalls in Fig. 1 dargestellt ist die Trennlinie 14, die das Verwenden eines anderen Materials für die nach links weisende Spitze 12 des Einschusskörpers 1 als für den Hauptkörper 7 rechts davon ermöglicht. Der im Vergleich zu einem maximalen Durchmesser 8 des Hauptkörpers 7 reduzierte Anfangsdurchmesser 9 der Spitze 12 ermöglicht leichteres Eindringen beispielsweise in Holz und reduziert durch Längsrippen 10 das Splitterverhalten bei Holz. Die Spitze 12 weist sozusagen eine flache Spitzenfläche 9 auf, ist also quasi etwas stumpf ausgebildet mit einer vorgenannten stumpfen Vorderfläche als flache Spitzenfläche 9. Zwischen den Längsrippen 10 verlaufen durch diese gebildete Längsnuten 10'. Die Längsrippen 10 können zusätzlich auf die Spitze 12 aufgebracht oder angeformt sein, stehen also über die eigentliche Kontur der Spitze 12 über. Diese wird im Wesentlichen in den Längsnuten 10' weitergeführt.

Eine hintere Fläche 11 des Hauptkörpers 7 bzw. des Einschusskörpers 1 nimmt dabei die Einschusskraft in Richtung der Spitze 12 auf, hier wirkt also beispielsweise ein Schlaghammer oder eine Treibladung. Ein innerer Kanal 26 kann nach Entfernen der Spitze 12 oder nach Zugang durch Vertiefung 18 den Zugriff auf den RFID-Tag 2 ermöglichen, beispielsweise zum Zwecke der Entsorgung bzw. zum Recycling. Der innere Kanal 26 verläuft bis zur Trennlinie 14, also bis zur Spitze 12.

Dieser Einschusskörper 1 weist also eine Form auf, die nicht zylindrisch ist bzw. gleichbleibenden Durchmesser über einen großen oder wesentlichen Teil der Länge aufweist, sondern sozusagen bombiert ist.

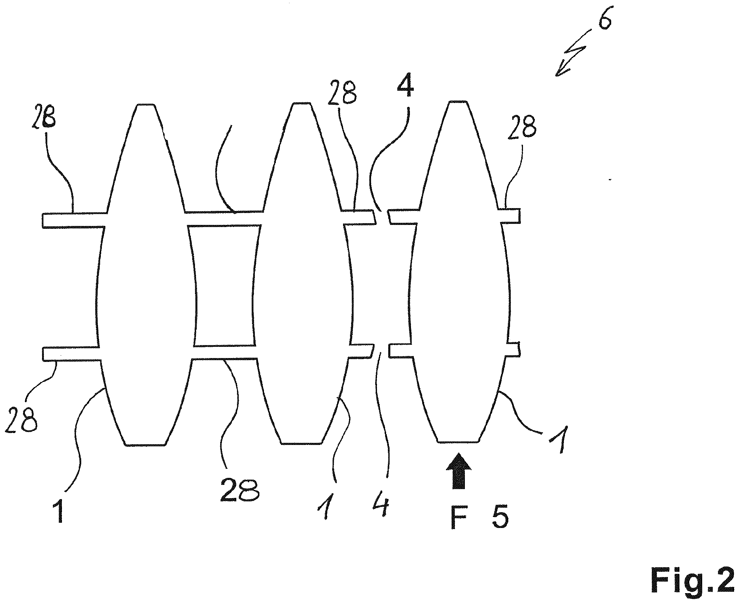

In der Fig. 2 ist ein Verbund 6 mehrerer Einschusskörper 1 entsprechend Fig. 1 dargestellt, insbesondere die stegartigen Verbindungselemente 28 zwischen den einzelnen Einschusskörpern 1. Ebenfalls in Fig. 2 ist das Auftrennen bzw. das Brechen 4 dieser Verbindungselemente 28 im Falle des Auftretens der Kraft F, die den eigentlichen Schussvorgang bzw. die Kraftaufbringung auf den Einschusskörper 1 darstellt. Dadurch wird im Augenblick des Schusses bzw. Auftretens der Kraft das Brechen 4 dieser Verbindungselemente 28 bewirkt und damit das Loslösen des Einschusskörpers 1 vom übrigen Verbund 6 und somit das Abschießen eines einzelnen Einschusskörpers 1 ermöglicht. Es ist zu erkennen, dass an der anderen Seite des Einschusskörpers 1 noch die Reste der vorherigen Verbindungselemente 28 zum vormals benachbarten Einschusskörper 1 vorhanden sind. Dies stört das Einschießen aber nicht, diese kurzen Überstände können beim Eindringen in das Objekt bzw. Material beim Einschiessen abreißen oder abgestreift werden.

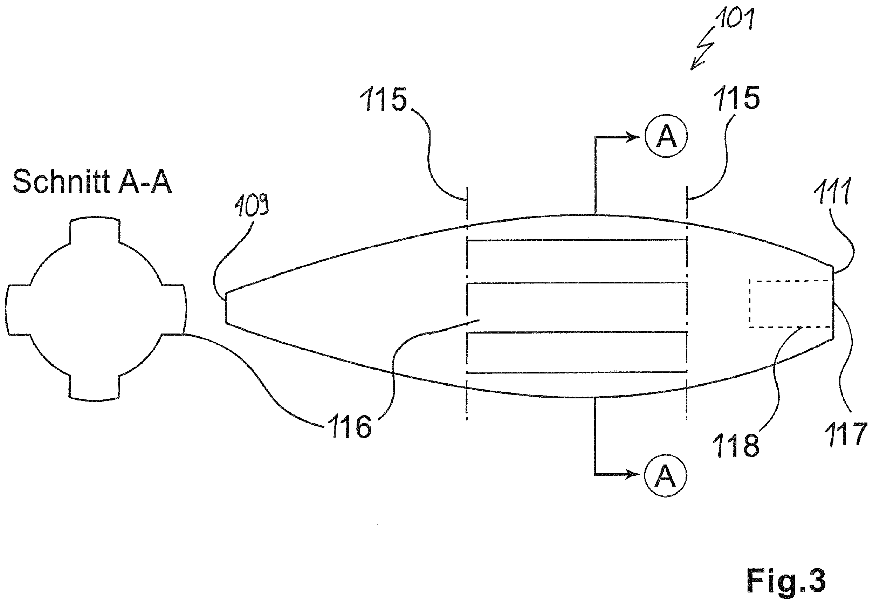

In der Fig. 3 ist die mögliche Ausgestaltung des Querschnitts nach Schnitt A-A eines alternativen Einschusskörpers 101 dargestellt. Ausgehend vom größten Durchmesser des Einschusskörpers 101 decken die Ausformungen 1116 nach Art von Längsrippen einen Bereich 15 vor und hinter diesem größten Durchmesser ab. Der links dargestellte Schnitt A-A zeigt ein Beispiel einer möglichen Form zur definierten Passung mit einer entsprechenden Öffnung im zu beschießenden Material.

Ebenfalls in Fig.3 ist eine Vertiefung 118 mit einer Öffnung 117 am hinteren Ende des Einschusskörpers 101 dargestellt. Hier kann ein Werkzeug zum Entfernen des Einschusskörpers 101 angesetzt werden.

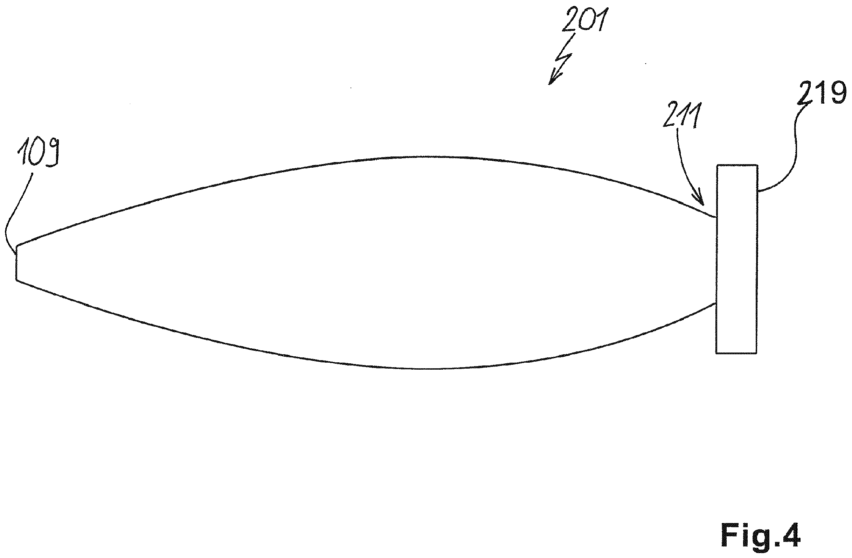

In der Fig. 4 dargestellt ist bei einem nochmals alternativen Einschusskörper 201 eine scheibenförmige Plattform 219 oder Verbreiterung am Ende 211, die als Anschlag zur Begrenzung der Eindringtiefe dient. Die in Fig. 3 beschriebene Öffnung 117 und die anschließende Vertiefung 118 werden durch die Plattform 219 nicht in ihrer Funktion beeinträchtigt, sie können hindurchgehen.

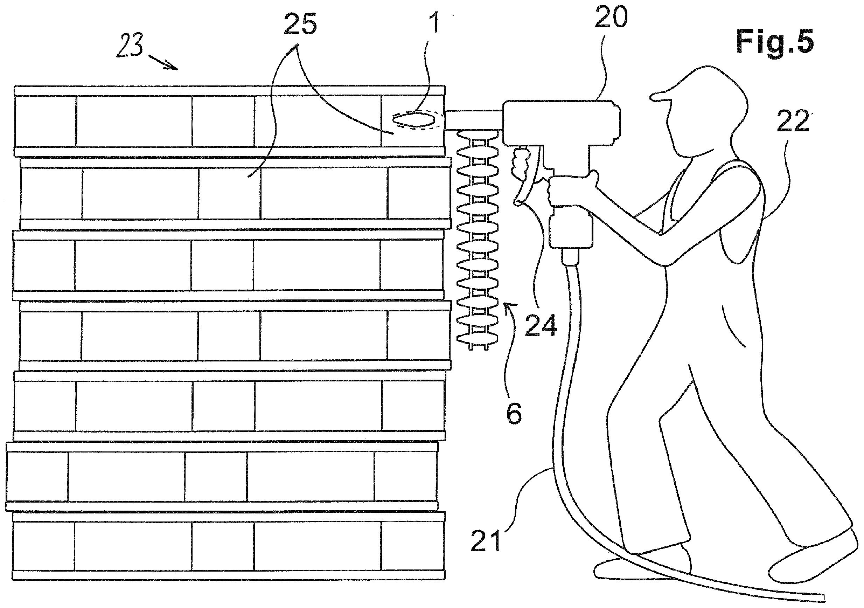

In der Fig. 5 ist die beispielhafte Funktionsweise beim Einschiessen dargestellt. Ein Arbeiter 22 setzt ein automatisches pneumatisch betriebenes Schussgerät 20, das über den Druckluftschlauch 21 mit Pressluft versorgt wird, an einer einzelnen Palette 25 eines Palettenstapels 23 an. Unten in das Schussgerät ist ein Verbund 6 von Einschusskörpern 1 entsprechend Fig. 2 eingesetzt. Vorteilhaft setzt er das Schussgerät 20 an einem Randklotz oder Eckklotz der Palette 25 an. Durch Drücken eines Auslösers 24 des Schussgerätes 20 wird ein einzelner Einschusskörper 1 vom Verbund 6 abgerissen und in einen Eckklotz der Palette 25 geschossen. Der rasche Wechsel zu einer darunter liegenden Palette 25, um den nächsten Schuss abzusetzen bzw. den nächsten Einschusskörper 1 in diese darunter liegenden Palette 25 einzubringen, erschließt sich ebenfalls aus Fig. 5. Vorteilhaft wird immer in einen Randklotz oder Eckklotz an derselben Position einer Palette 25 geschossen, so wird die Identifikation nachher leichter.

Ein Beschreiben und/oder Auslesen eines RFID-Tags 2 im Inneren der Einschusskörper 1 kann auf bekannte Art und Weise erfolgen. Dass der RFID-Tag 2 dabei in dem Holz- oder Pressspanmaterial der Palette 25 sitzt stört hier nicht.

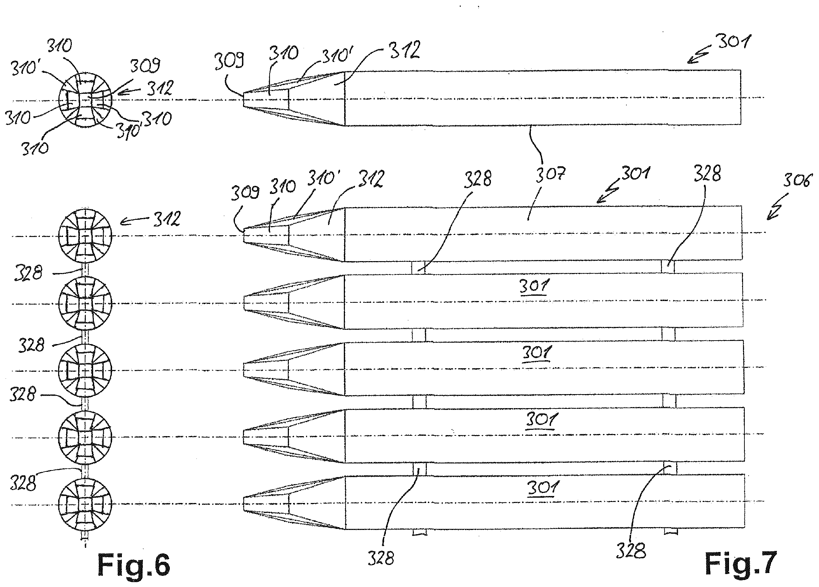

In der Fig. 6 in Draufsicht und der Fig. 7 in Seitenansicht ist eine alternative Form eines Einschusskörpers 301 dargestellt. Dieser weist einen länglichen und rundzylindrischen Hauptkörper 307 auf, der den größten Teil der Länge des Einschusskörpers 301 einnimmt, insbesondere etwa 80%. In diesem Hauptkörper 307 befindet sich ein hier nicht dargestellter RFID-Tag wie zuvor beschrieben. Auch weitere Möglichkeiten wie ein innerer Kanal oder eine spezielle Ummantelung des RFID-Tags können ganz offensichtlich vorgesehen sein.

Links weist jeder Einschusskörper 301 eine Spitze 312 auf, deren Form zusammen mit den Vorderansichten der Fig. 6 gut erkannt werden kann. Von einer vorderen Fläche 309 bzw. einem eingangs beschriebenen Anfangsdurchmesser gehen verteilt vier Längsrippen 310 ab nach hinten und bilden insgesamt eine Spitze 312, die in etwa nach Art eines Kreuzschlitzschraubendrehers, insbesondere wie er für Spax^{®}-Schrauben optimiert ist, entspricht. Diese spezielle Form hat sich als sehr vorteilhaft herausgestellt zum Einschießen eines Einschusskörpers 301 in Pressspan, wie er heutzutage häufig als Randklotz bzw. Eckklotz von Paletten verwendet wird. Die vier Längsrippen 310 werden eigentlich gebildet von vier Längsnuten 310', die als Einschnitte in die Spitze 312 ausgebildet sind. Somit verlaufen hier, wie allgemein vorteilhaft vorgesehen sein kann, diese Längsnuten 310' in den Umfang bzw. die Außenfläche der Spitze 312 hinein oder sind herausgearbeitet, so dass die Längsrippen 310 stehen bzw. übrig bleiben. Sie sind also nicht extra aufgebracht, wie dies bei der Ausführung der Fig. 1 sein kann.

Während in den Fig. 6 und 7 oben jeweils zur besseren Verdeutlichung ein einzelner Einschusskörper 301 dargestellt ist, ist darunter ein Verbund 306 aus mehreren Einschusskörpern 301 dargestellt, die jeweils mittels zwei Verbindungselementen 328 miteinander verbunden sind. Wie eingangs beschrieben worden ist, können die Einschusskörper 301 als Verbund 306 gemeinsam hergestellt werden, insbesondere in einem gemeinsamen Spritzverfahren. Ein solcher Verbund 306 kann zwischen zehn und zwanzig bis dreißig oder sogar vierzig Einschusskörper 301 umfassen.

Des Weiteren ist es allgemein möglich, einen Verbund von Einschusskörpern nicht mit zwei Verbindungselementen zusammenzuhalten, sondern nur mit einem oder mit drei oder sogar vier.

Gleichzeitig ist vor allem aus den Fig. 2 und 7 zu erkennen, dass diese Einschusskörper, insbesondere die rundzylindrischen länglichen der Fig. 7, nicht zwingend in einem zusammenhängenden Verbund eingesetzt werden müssen, um sie mit einem Schussgerät 20 entsprechend Fig. 5 einschießen zu können. Sie könnten auch, wie eingangs beschrieben wurde, in ein spezielles Magazin ähnlich einem Magazin einer halbautomatischen oder automatischen Schusswaffe eingebracht werden und dann durch einen entsprechenden Transportmechanismus in dem Schussgerät jeweils einzeln herangeführt und in eine Palette eingeschossen werden. Das Befüllen bzw. Bedienen eines solchen Magazins kann dann erfolgen wie bei einer solchen bekannten Schusswaffe.

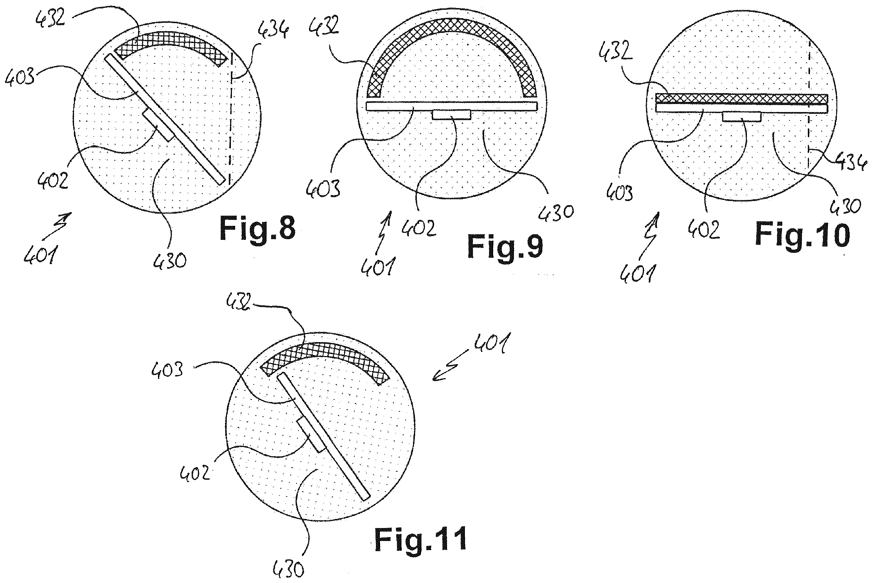

In der Fig. 8 ist ein Einschusskörper 401 im Querschnitt dargestellt, beispielsweise mit grundsätzlich ähnlicher äußerer Formgebung entsprechend Fig. 7. Der Einschusskörper 401 weist in etwa auf der Längsmittelachse einen RFID-Tag 402 auf samt Antenne 403, die hier dargestellt ist. Der Einschusskörper 401 besteht weitgehend aus einem vorgenannten Kunststoff 430, der den RFID-Tag 402 samt Antenne 403 umhüllt. Des Weiteren ist ferritisches Material 432 als eine Art vorgenannte Abschirmung vorhanden bzw. nach Art eines Schildes oder eben einer Abschirmung vorgesehen, vorteilhaft eingespritzt aus einem Kunststoff, der mit ferritischem Pulver oder Granulat angereichert bzw. vermischt ist. Das ferritische Material 432 als Abschirmung sollte vollständig innerhalb des Einschusskörpers 401 und somit des Kunststoffs 430 sein. Es kann gewölbt sein wie hier dargestellt und einen Viertelkreis bilden. Die optimale Abschirmwirkung ergibt sich hier in einer Richtung nach oben. Der Einschusskörper aus Fig. 8 sollte also so in eine Palette 25 entsprechend Fig. 5 eingeschossen sein, dass das ferritische Material 432 als Abschirmung oberhalb des RFID-Tags 402 liegt. So wird auch die Antenne 403 zumindest teilweise nach oben abgeschirmt. Der Einschusskörper 401 der Fig. 8 kann ein einzelner Einschusskörper sein oder aber in einem Verbund mit weiteren sein entsprechend Fig. 7, also mittels Verbindungselementen mit weiteren Einschusskörpern verbunden sein, vorteilhaft zusammengespritzt.

Hier ist auch eine zuvor beschriebene Einkerbung bzw. Vertiefung 434 gestrichelt dargestellt. Sie verläuft in einer Richtung senkrecht zu einer Längsmittelachse des Einschusskörpers 401. Sie sorgt für das positionsgenaue bzw. positionsgetreue Einführen des Einschusskörpers 401 in eine Einschussvorrichtung. Es könnten auch zwei Vertiefungen 434 vorgesehen sein für eine gute Führung beim Einführen in die Einschussvorrichtung.

Beim Einschusskörper 401 der Fig. 9 bildet das ferritische Material 432 einen Halbkreis, quasi als etwas weiter gewölbte Abschirmung im Vergleich zur Fig. 8. Die optimale Abschirmwirkung ergibt sich hier auch in einer Richtung nach oben, der Einschusskörper sollte also genau so eingeschossen werden. Dann liegt das ferritische Material 432 über dem RFID-Tag 402 samt Antenne 403.

Beim Einschusskörper 401 der Fig. 10 weist das ferritische Material 432 eine gerade Erstreckung auf und liegt dafür an der Antenne 403 an. Dies könnte so sehr leicht als eine Baueinheit vorgefertigt werden, die dann insgesamt mit dem Kunststoff 430 umspritzt wird. Hier ist auch wieder eine zuvor genannte Einkerbung bzw. Vertiefung 434 gestrichelt dargestellt. Sie verläuft auch in einer Richtung senkrecht zu einer Längsmittelachse des Einschusskörpers 401. Vorteilhaft sind es hier zwei Einkerbungen bzw. Vertiefungen 434, eine vor und eine hinter der Antenne 403 samt ferritischem Material 432.

Beim Einschusskörper 401 der Fig. 11 ähnelt die Form des ferritischen Materials 432 derjenigen aus Fig. 8, also einem Viertelkreis. Allerdings verläuft die Abschirmung über die Antenne 403 bzw. überlappt diese, die hier etwas kürzer ausgebildet ist. So ist eine Abschirmung nach oben nochmals deutlich verbessert, wie man im Vergleich zur Fig. 8 gut erkennen kann.

## Patentansprüche

1. Einschusskörper (1, 101, 201, 301, 401) zum Einschießen in eine Transportaufnahmevorrichtung (25), wobei der Einschusskörper (1, 101, 201, 301, 401) länglich ausgebildet ist und eine elektronische oder elektromechanische Sende- und/oder Empfangsvorrichtung (2) aufweist, die als RFID- oder NFC-Tag ausgebildet ist, wobei der Einschusskörper (1, 101, 201, 301, 401) mindestens an einer Spitze (12, 312) verjüngt ausgebildet ist.

2. Einschusskörper nach Anspruch 1, **dadurch gekennzeichnet, dass** die Spitze (12, 312) des Einschusskörpers (1, 301) mindestens zwei in Ebenen entlang der Längsmittelachse des Einschusskörpers (1, 301) verlaufende Längsnuten (10', 310') aufweist, vorzugsweise vier gleichmäßig verteilte Längsnuten (10', 310'), wobei vorzugsweise die Längsnuten (10', 310') an einer verjüngt ausgebildeten Spitze (12, 312) vorgesehen sind und dazwischen Längsrippen (10, 310) liegen, die gleichbleibende Breite aufweisen, wobei insbesondere die Spitze (312) eine Form ähnlich einem Kreuzschlitzschraubendreher aufweist.

3. Einschusskörper nach Anspruch 1 oder 2, **dadurch gekennzeichnet, dass** in dem Einschusskörper (401) magnetisierbares bzw. ferritisches Material (432) angeordnet ist benachbart zu der elektronischen oder elektromechanischen Sende- und/oder Empfangsvorrichtung (2) und/oder einer Antenne der Sende- und/oder Empfangsvorrichtung, wobei vorzugsweise das magnetisierbare bzw. ferritische Material (432) als gewölbte Fläche mit einer Größe größer als die Sende- und/oder Empfangsvorrichtung und diese in einer Richtung seitlich überall überstehend überragend oder abschirmend ausgebildet ist.

4. Verbund (6, 306) von mehreren gleichen Einschusskörpern (1, 101, 201, 301, 401), insbesondere Einschusskörpern (1, 101, 201, 301, 401) nach einem der vorhergehenden Ansprüche, wobei jeder Einschusskörper (1, 101, 201, 301, 401) eine elektronische oder elektromechanische Sende- und/oder Empfangsvorrichtung (2) aufweist, wobei die elektronische oder elektromechanische Sende- und/oder Empfangsvorrichtung (2) als RFID-Tag oder als NFC-Tag ausgebildet ist,
**dadurch gekennzeichnet, dass**
die Einschusskörper (1, 101, 201, 301, 401) nebeneinander oder hintereinander durch ein oder mehrere Verbindungselemente (28, 328) miteinander verbunden sind, wobei die Verbindungselemente (28, 328) für ein mechanisches Abreißen (4) durch äußere Krafteinwirkung (F) auf einen einzelnen Einschusskörper (1, 101, 201, 301, 401) ausgebildet sind.

5. Verbund nach Anspruch 4, **dadurch gekennzeichnet, dass** die Einschusskörper (1, 101, 201) am von einer Spitze (12) abgewandten Ende (11, 111, 211) verjüngt ausgebildet sind, vorzugsweise mit einer Durchmesserverjüngung um mindestens 5%, insbesondere bis 50%.

6. Verbund nach einem der Ansprüche 4 oder 5, **dadurch gekennzeichnet, dass** ein Einschusskörper (301) bis auf eine verjüngte Spitze (312) weitgehend bzw. über mindestens 50% der Länge zylindrisch und gerade ausgebildet ist, insbesondere rundzylindrisch.

7. Verbund nach einem der Ansprüche 4 bis 6, **dadurch gekennzeichnet, dass** die Einschusskörper (1, 101, 201, 301, 401) am von der Spitze (12, 312) abgewandten Ende (11, 111, 211) eine plastisch verformbare Fläche zur Kennzeichnung durch Prägestempel oder dergleichen aufweisen.

8. Verbund nach einem der Ansprüche 4 bis 7, **dadurch gekennzeichnet, dass** ein vorderer Bereich (12, 312) des Einschusskörpers (1, 101, 201, 301) aus einem härteren Material als das Material eines hinteren Teils (7) des Einschusskörpers Verbund nach einem der Ansprüche 4 oder 5, **dadurch gekennzeichnet, dass** die Einschusskörper (1, 101, 201, 301, 401) besteht, insbesondere die Spitze (12, 312), wobei der vordere Bereich (12, 312) form- und kraftschlüssig mit diesem hinteren Teil (7) verbunden (14) ist.

9. Verbund nach einem der Ansprüche 4 bis 8, **dadurch gekennzeichnet, dass** der Einschusskörper (101) im Querschnitt symmetrische oder asymmetrische angeordnete Längsnuten (116) mindestens über einen Längenbereich seines maximalen Durchmessers hinausgehend aufweist.

10. Verbund nach einem der Ansprüche 4 bis 9, **dadurch gekennzeichnet, dass** die Einschusskörper (111) an dem der Spitze (109) entgegengesetzten Ende eine Öffnung (117) mit einer dahinter liegenden Vertiefung (118) aufweisen zum Einführen eines Werkzeuges, mit dem der Einschusskörper (111) aus einem mit dem Einschusskörper (111) bestückten Objekt (25) wieder entfernbar ist.

11. Verbund nach Anspruch 8 oder 10, **dadurch gekennzeichnet, dass** die Sende- und/oder Empfangsvorrichtung (2) über die Vertiefung (118) oder über die Spitzen-Trennfläche (14) durch einen Kanal (26) in das Innere des Einschusskörpers (1, 111) verbracht und auf demselben Wege wieder entfernt wird.

12. Verbund nach einem der Ansprüche 4 bis 11, **dadurch gekennzeichnet, dass** die Sende- und/oder Empfangsvorrichtung (2) in eine Hülse gebracht und mittels dieser Hülse in den Einschusskörper (1, 101, 201, 301, 401) eingespritzt ist, wobei vorzugsweise ein Einspritzverfahren einstufig oder zweistufig abläuft.

13. Verbund nach einem der Ansprüche 4 bis 12, **dadurch gekennzeichnet, dass** der Einschusskörper (201) an dem der Spitze (212) entgegengesetzten Ende eine scheibenförmige Plattform (219) aufweist, die als Anschlag zur Begrenzung der Eindringtiefe in das mit dem Einschusskörper (201) zu bestückende Objekt (25) dient.

14. Verfahren zum Einschießen eines Einschusskörpers (1, 101, 201, 301, 401), insbesondere eines Einschusskörpers (1, 101, 201, 301, 401) nach einem der Ansprüche 1 bis 3 und/oder eines Einschusskörpers eines Verbundes nach einem der Ansprüche 4 bis 13, in einen Abschnitt eines Transportbehälters bzw. einer Transportaufnahmevorrichtung (25), wobei der Einschusskörper (1, 101, 201, 301, 401) eine elektronische oder elektromechanische Sende- und/oder Empfangsvorrichtung aufweist, die als RFID-Tag oder NFC-Tag (2) ausgebildet ist, **dadurch gekennzeichnet, dass** der Einschusskörper (1, 101, 201, 301, 401) mittels einer pneumatisch, pyrotechnisch oder elektrisch angetriebenen Einschussvorrichtung (20) in den entsprechenden Abschnitt der Transportaufnahmevorrichtung (25) eingeschossen wird.

15. Verfahren nach Anspruch 14, **dadurch gekennzeichnet, dass** der Einschusskörper (1, 101, 301, 401) vollständig eingeschossen wird, so dass er nicht mehr über eine Außenseite der Transportaufnahmevorrichtung (25) übersteht, insbesondere nicht mehr sichtbar ist.
